# EUROPÄISCHE PATENTANMELDUNG

(11) **EP 3 148 054 A1**
(43) Veröffentlichungstag der Anmeldung: **29.03.2017**
(21) Anmeldenummer: 15186662.1
(22) Anmeldetag: 24.09.2015
(51) Int. Cl.: H02K 1/12, H02K 3/14

(54) **ELEKTRISCHER GENERATOR MIT ABTREPPUNGSBEREICH**

(71) Anmelder: Siemens Aktiengesellschaft, 80333 München (DE)
(72) Erfinder: Kowalski, Matthias, 45478 Mülheim an der Ruhr (DE)

(57) **Zusammenfassung**

Die Erfindung betrifft einen Stator für eine elektrodynamische Maschine, wobei das Blechpaket (1) am Ende vertreppt ausgeführt ist und die Verröbelung der Teilleiter (5) bis über das Ende hinaus des Blechpaket-Endes (10) bis zur evolventen Biegung (9) weitergeführt wird.

## Beschreibung

Die Erfindung betrifft einen Stator für eine elektrodynamische Maschine umfassend ein mehrere Bleche aufweisendes Blechpaket, eine Statorwicklung, die in Schlitze im Blechpaket abgeordnet sind, wobei die Statorwicklung aus mehreren Teilleitern ausgebildet ist, wobei das Blechpaket ein Blechpaket-Ende aufweist, aus der die Statorwicklung ragt.

Desweiteren betrifft die Erfindung ein Verfahren zum Betreiben eines elektrischen Generators, wobei der Generator einen Stator mit einer Statorwicklung aufweist, wobei die Statorwicklung in einem Blechpaket angeordnet wird, wobei die Statorwicklung einen Bereich außerhalb des Blechpakets aufweist.

Elektrodynamische Maschinen wie beispielsweise ein elektrischer Generator umfassen einen drehbar gelagerten Rotor mit einer Rotorwicklung und einen um den Rotor angeordneten Stator mit einer Statorwicklung.

Im Betrieb strömt durch die Rotorwicklung ein elektrischer Strom, der zu einem Magnetfeld führt. Durch die Rotation des Magnetfeldes innerhalb des Stators wird in der Statorwicklung eine elektrische Spannung induziert. Dadurch wird elektrische Energie erzeugt.

Der Stator umfasst mehrere Bleche, die aus Segmentblechen bestehen, die in Umfangsrichtung nebeneinander angeordnet sind. Desweiteren sind die Bleche in einer Achsenrichtung übereinander angeordnet. Die Bleche weisen Schlitze auf, in die die Statorwicklung eingebracht wird. Die Statorwicklung umfasst elektrisch leitende Leitungsstäbe, die üblicherweise aus Kupfer bestehen. Die einzelnen Leiterstäbe umfassen in der Regel mehrere Teilleiter, die gegeneinander transponiert sind. Üblicherweise werden diese Teilleiter gegeneinander verröbelt. Dadurch werden Wirbelstromeffekte minimiert.

Außerhalb des Blechpakets ragt die Statorwicklung aus dem Blechpaket heraus. Das Ende der Statorwicklung wird auch als Wicklungskopf bezeichnet und liegt außerhalb des Blechpakets. In der Regel umfasst die Statorwicklung einen elektrischen Oberstab und einen elektrischen Unterstab. Innerhalb des Blechpakets wird die Statorwicklung vergleichsweise homogen mit dem rotierenden Magnetfeld durchflossen. Es existieren Generatoren, deren Blechpakete derart ausgebildet sind, dass an dem Blechpaket-Enden die einzelnen Bleche verkürzt sind, so dass am Blechpaket-Ende eine stufenartige Abtreppung erfolgt. Die Leiterstäbe ragen aus dieser stufenartigen Abtreppung hervor. Die an dem Blechpaket-Ende auftretenden Magnetfelder sind mit den im Inneren der Statorwicklung auftretenden Magnetfeldern nicht zu vergleichen.

In der Regel werden die Leiterstäbe im Blechpaket verröbelt. Das Ende des Blechpakets ist durch eine Abtreppung in Folge von verkürzten Eisenzähnen charakterisiert. Da das vom Rotor erzeugte Magnetfeld im Bereich der Abtreppung durch die verkürzten Eisenzähne erst auf einem höheren Radius eingefangen wird, strömt ein größerer Teil des magnetischen Feldes durch die magnetisch neutralen Statorstäbe, die aus dem Statoreisen herausragen. Erst wenn die magnetischen Feldlinien auf einem Radius angekommen sind, auf welchem sich auch Eisen befindet, wird diese den Statorstab verlassen und in dieses eintreten. Da allerdings ein zeitlich veränderliches Magnetfeld in einen Ständerstab, der einen leitfähigen Körper darstellt, eindringt, sind Wirbelströme die Folge, die zu lokalen Verlusten und zu einer höheren Temperatur führen. Vor allem in den oberen Teilleitern, das sind jene Teilleiter, die dem Luftspalt am nächsten sind, ist dieses Phänomen beobachtbar. Die Temperatursteigerungen können zu einem Hotspot führen, welche die elektrische Maschine in ihrer Ausnutzung stark eingrenzt.

Diese elektrischen Maschinen werden so gefertigt, dass die Verröbelung der Teilleiter vor dem Bereich der Abtreppung endet. Daraus ergibt sich, dass alle Teilleiter über eine bestimmte Strecke geradeaus Richtung einem evolventem Bereich führen, bis sie in eine Biegung münden. Allerdings sind die Verluste eines sehr langen auf einer Höhe verlaufenden Leiters derart, dass diese quadratisch mit der Teilleiterbreite einhergehen.

Diesem Problem kann beispielweise durch eine Änderung des Abtreppungsprofils entgegnet werden, was allerdings nur sehr bedingt das Problem löst, da die Erwärmungsproblematik auf andere Bereiche wie Kappe und Endfläche verlagert werden.

Ein anderer Ansatz wäre die Anzahl der Kühlschlitze zu erhöhen, um die Kühlung zu verstärken. Dies ist allerdings nur sehr bedingt möglich, da die Hauptisolierung einen großen Wärmewiderstand darstellt.

Ein weiterer Ansatz ist, den Stator länger als den Rotor auszuführen, was allerdings dazu führt, dass die Einströmfläche für das Kühlgas derart verengt wird, dass die Kühlung des Aktivteils der Maschine kritisch wird.

Es ist Aufgabe der Erfindung die elektrische Maschine dahingehend zu verbessern, dass die Verluste an den Enden der Blechpakete verringert sind.

Gelöst wird diese Aufgabe durch einen Stator für eine elektrodynamische Maschine, umfassend ein mehrere Bleche aufweisendes Blechpaket, eine Statorwicklung, die in Schlitze im Blechpaket angeordnet sind, wobei die Statorwicklung aus mehreren Teilleitern ausgebildet ist, wobei das Blechpaket ein Blechpaket-Ende aufweist, aus der die Statorwicklung ragt, wobei die Teilleiter aus dem Blechpaket ragenden Teil der Statorwicklung transponiert sind.

Die Erfindung geht von dem Aspekt aus, dass in dem Bereich der erhöhten Radialfeldverluste die Teilleiter transponiert werden. Das würde zu einer Reduzierung der lokalen Verluste führen. Eine Folge ist, dass die Temperatur absinkt und die Wärme nun axial und radial abtransportiert werden kann, was die Heißstellen zusätzlich in ihrer Temperatur absenkt.

Erfindungsgemäß wird somit vorgeschlagen, die Teilleiter zu verdrillen. In einer vorteilhaften Weiterbildung wird vorgeschlagen die Teilleiter zu verröbeln.

Die Erfindung geht von dem Aspekt aus, dass die Teilleiter durch ihrem steigenden bzw. fallenden Verlauf gekippt sind, was zu einer Reduzierung der Fläche senkrecht zur Feldlinie führt, welche der Wirbelstrom als Bahn nutzen kann. Durch den erfindungsgemäßen Vorschlag der Transponierung werden viel kleinere Wirbelstromgebiete entstehen, die dann ebenfalls zu kleineren Wirbelstömen führen.

Ein Vorteil der Erfindung ist, dass die Hotspot-Temperatur des Generators gesenkt werden kann, was eine höhere Ausnutzbarkeit der Maschine erlaubt. Durch Transponieren der Teilleiter werden dadurch Radialfeldverluste im Abtreppungsbereich vermieden. Erfindungsgemäß wird somit vorgeschlagen die im Blechpaket durchgeführte Transponierung der Teilleiter über den Abtreppungsbereich hinaus weiterzuführen. Vorteilhafte Weiterbildungen sind in den Unteransprüchen angegeben.

In einer vorteilhaften Weiterbildung umfasst die Statorwicklung einen Oberlagestab und einen Unterlagestab. Der Oberlagestab ist hierbei verröbelt außerhalb des Blechpakets und der Unterlagestab unverröbelt außerhalb des Blechpakets. In einer alternativen Ausführungsform kann der Unterlagestab ebenfalls verröbelt ausgeführt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen
- Figur 1: eine seitliche Darstellung eines Teils einer Statorwicklung,
- Figur 2: eine perspektivische Ansicht des Endbereichs einer Statorwicklung,
- Figur 3: eine schematische Darstellung eines Teilleiters,
- Figur 4: eine schematische Darstellung der Magnetfelder eines erfindungsgemäßen Teilleiters und einen Teilleiters gemäß dem Stand der Technik,
- Figur 5: eine schematische Darstellung der Magnetfelder und Anordnung der Teilleiter gemäß der Erfindung und gemäß dem Stand der Technik.

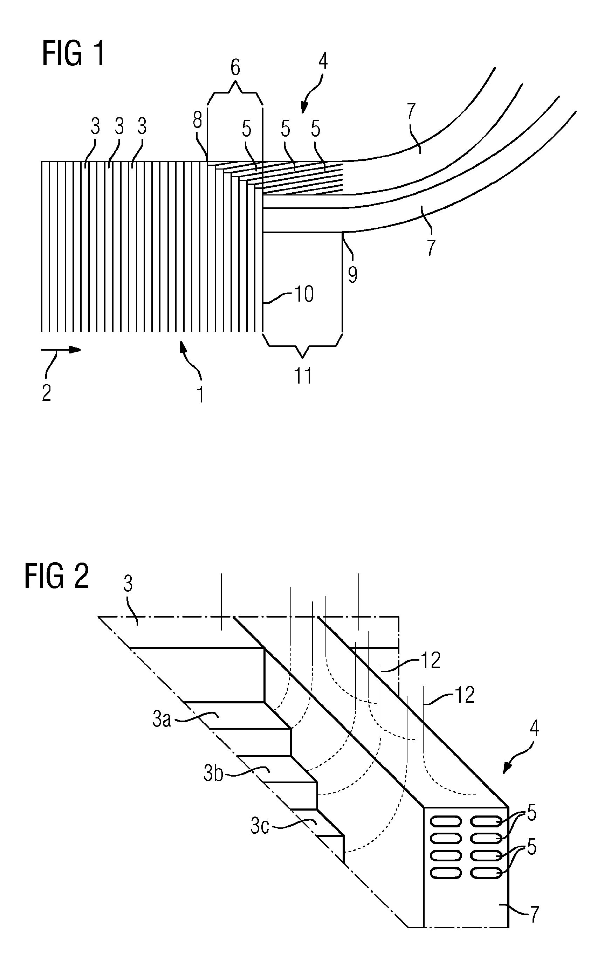

Figur 1 zeigt einen Teil eines Blechpakets 1. Das Blechpaket 1 ist in einer Rotationsachsenrichtung 2 aus dünnen Blechen 3 ausgebildet. Aus Gründen der Übersichtlichkeit sind lediglich drei Bleche mit dem Bezugszeichen 3 versehen. In einer in Figur 1 nicht darstellbaren Umfangsrichtung sind mehrere Segmentbleche in Umfangsrichtung angeordnet. Die Segmentbleche weisen Schlitze auf, in die die Statorwicklung 4 angeordnet ist. Die Statorwicklung 4 wird aus mehreren Teilleitern 5 ausgebildet. Aus Gründen der Übersichtlichkeit sind in der Figur 1 lediglich 3 Teilleiter mit dem Bezugszeichen 5 versehen.

Im Endbereich 6 ist das Blechpaket derart ausgeführt, dass die einzelnen Bleche verkürzt sind. Das bedeutet, dass im Endbereich 6 das Blechpaket treppenartig ausgebildet ist. Die Statorwicklung 4 ist somit im Endbereich an einem treppenartigen Blechpaket angeordnet. Gemäß dem Stand der Technik wird der aus Teilleitern bestehende Leiterstab 7 bis zum Beginn 8 des Endbereichs transponiert, verdrillt oder verröbelt.

Der Leiterstab 7 ragt nach dem Endbereich 6 gradlinig hervor bis zu einem Biegepunkt 9 und von dort wird das Ende des Leiterstabes 7 gebogen. Der Leiterstab 7 ist aus mehreren Teilleitern 5 ausgebildet, die nach einem Blechpaket-Ende 10 transponiert, verdrillt oder verröbelt sind. Dieser Bereich 11 der Transponierung, Verdrillung und Verröbelung erstreckt sich bis zum Biegepunkt 9.

Figur 2 zeigt eine perspektivische Ansicht eines Teils des Stators aus Figur 1. Figur 2 zeigt die Statorwicklung 4, die aus mehreren Teilleitern 5 ausgebildet ist. Desweiteren ist in Figur 2 die treppenartige Ausbildung des Blechpakets 1 zu sehen. Nach einem ersten Blech 3 folgt ein kürzer ausgebildetes Blech 3a, anschließend folgt ein noch kürzer ausgebildetes Blech 3b, das auf ein noch kürzer ausgebildetes Blech 3c folgt. Dadurch entsteht eine treppenartige Gestalt des Endbereichs des Blechpakets. Desweiteren sind in Figur 2 Magnetfeldlinien 12 dargestellt, die die Verteilung des Magnetfeldes im Endbereich 6 darstellt.

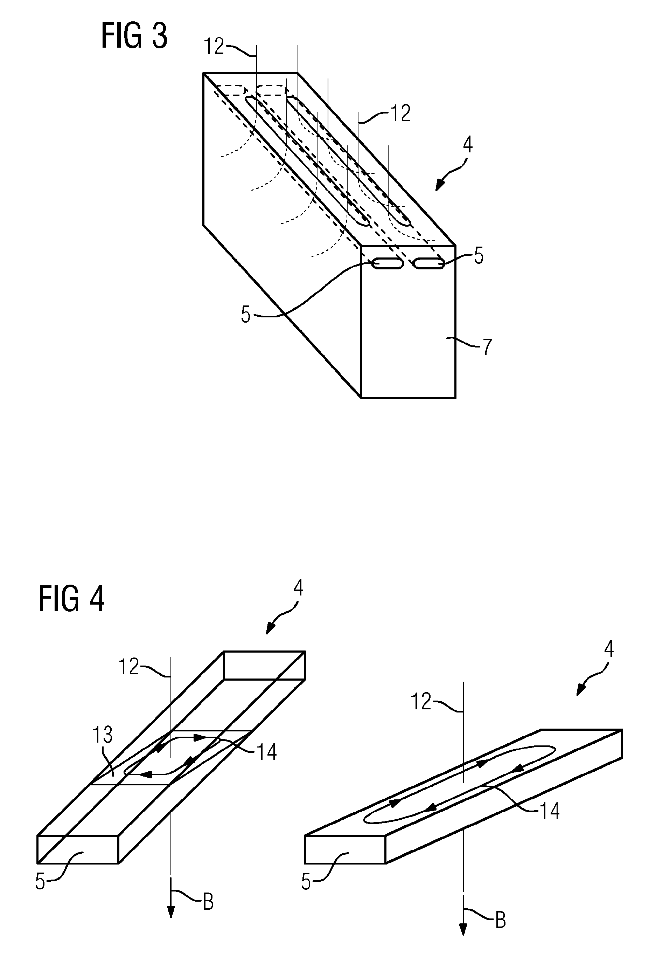

Die Figur 3 zeigt eine schematische Darstellung des Leiterstabes 7, der aus mehreren Teilleitern 5 ausgebildet ist. Die Ausbildung der Teilleiter 5 gemäß Figur 3 ist eine Ausbildung gemäß dem Stand der Technik. In der Figur 3 ist ebenso das Magnetfeld durch Magnetfeldlinien 12 dargestellt. Aus Gründen der Übersichtlichkeit sind lediglich zwei Magnetfeldlinien mit dem Bezugszeichen 12 versehen.

Die Figur 4 zeigt in der linken Darstellung eine schematische Ansicht eines Teils des Teilleiters 5. Durch die Schräganordnung des Teilleiters 5 durch die Transponierung, Verdrillung oder Verröbelung, erfährt eine schräg angeordnete Querschnittsfläche 13 das Magnetfeld, das durch eine Magnetfeldlinie 12 dargestellt ist. In der rechten Darstellung der Figur 4 ist ein Teilleiter 5 gemäß dem Stand der Technik dargestellt. Zu sehen ist, dass ein Wirbelstrom 14 einen größeren Radius erfährt als ein Wirbelstrom 14 gemäß einem Teilleiter 5 der Erfindung.

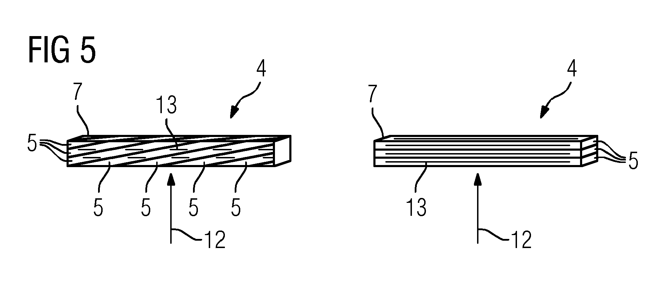

In der Figur 5 ist in der linken Darstellung die Anordnung der Teilleiter 5 gemäß der Erfindung dargestellt. Zu sehen sind desweiteren mehrere Querschnittsflächen 13, die durch ein Magnetfeld 12 durchflossen werden. In diesen Querschnittsflächen 13 entstehen Wirbelströme. Aus Gründen der Übersichtlichkeit ist nur eine Querschnittsfläche mit dem Bezugszeichen 13 versehen. Im rechten Teil der Figur 5 ist eine Anordnung der Teilleiter gemäß dem Stand der Technik zu sehen. In der Figur 5 wurde die Querschnittsfläche 13 ebenfalls mit dem Bezugszeichen 13 versehen, wobei aus Gründen der Übersichtlichkeit nur eine Querschnittsfläche mit dem Bezugszeichen 13 versehen wurde. Zu sehen ist, dass in der Querschnittsfläche vergleichsweise große Wirbelströme gegenüber den Wirbelströmen gemäß Figur 5a in der linken Darstellung erreicht werden. Dies führt dazu, dass die Erwärmung der Teilleiter gemäß der linken Darstellung geringer ist als in der rechten Darstellung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stator für eine elektrodynamische Maschine umfassend
ein mehrere Bleche (3) aufweisendes Blechpaket (1),
eine Statorwicklung, die in Schlitze im Blechpaket (1) angeordnet sind,
wobei die Statorwicklung (4) aus mehreren Teilleitern (5) ausgebildet ist,
wobei das Blechpaket (1) ein Blechpaket-Ende (10) aufweist, aus der die Statorwicklung (4) ragt,
**dadurch gekennzeichnet, dass**
die Teilleiter (4) des aus dem Blechpaket (1) ragenden Teils der Statorwicklung (4) transponiert sind.

2. Stator nach Anspruch 1,
wobei die Teilleiter (5) des aus dem Blechpaket (1) ragenden Teils der Statorwicklung (4) verdrillt sind.

3. Stator nach Anspruch 1 oder 2,
wobei die Teilleiter (5) verröbelt sind.

4. Stator nach Anspruch 1, 2 oder 3,
wobei am Blechpaket-Ende (10) die Bleche (3) verkürzt ausgebildet sind.

5. Stator nach Anspruch 4,
wobei die Bleche (3) des Blechpaket-Endes (10) treppenartig ausgebildet sind.

6. Stator nach einem der vorhergehenden Ansprüche,
wobei die Bleche (3) in einer Umfangsrichtung in mehrere Segmentbleche ausgebildet sind.

7. Stator nach einem der vorhergehenden Ansprüche,
wobei die Statorwicklung (4) einen Oberlagestab und einen Unterlagestab aufweist,
wobei der Oberlagestab verröbelt ist außerhalb des Blechpakets (1) und der Unterlagestab unverröbelt ist außerhalb des Blechpakets (1).

8. Stator nach einem der Ansprüche 1 bis 6,
wobei der Oberlagestab verröbelt ist außerhalb des Blechpakets (1) und der Unterlagestab verröbelt ist außerhalb des Blechpakets (1).

9. Stator nach einem der vorhergehenden Ansprüche,
wobei die Statorwicklung (4) außerhalb des Blechpakets (1) zunächst gradlinig und anschließend gebogen ausgebildet ist und die Teilleiter (5) nur im gradlinigen Abschnitt transponiert, verdrillt oder verröbelt sind.

10. Verfahren zum Betreiben eines elektrischen Generators,
wobei der Generator einen Stator mit einer Statorwicklung (4) aufweist,
wobei die Statorwicklung (4) in einem Blechpaket (1) angeordnet wird,
wobei die Statorwicklung (4) einen Bereich außerhalb des Blechpakets (1) aufweist,
wobei das Ende des Blechpakets (10) abgetreppt ausgebildet wird,
wobei die Statorwicklung (4) außerhalb des Blechpakets (1) transponiert, verdrillt oder verröbelt ausgebildet wird.
